(19) Europäisches Patentamt / European Patent Office / Office européen des brevets

(11) **EP 3 780 423 B1**

(12) **EUROPEAN PATENT SPECIFICATION**

(45) Date of publication and mention
of the grant of the patent:
**22.06.2022 Bulletin 2022/25**

(21) Application number: **18920695.6**

(22) Date of filing: **28.05.2018**

(51) International Patent Classification (IPC):
*H04W 12/79* (2021.01)      *H04B 17/30* (2015.01)

(52) Cooperative Patent Classification (CPC):
**H04W 12/79; H04B 17/30**

(86) International application number:
**PCT/JP2018/020387**

(87) International publication number:
**WO 2019/229813 (05.12.2019 Gazette 2019/49)**

(54) **WIRELESS DEVICE IDENTIFICATION DEVICE**

IDENTIFIZIERUNGSVORRICHTUNG FÜR EINE DRAHTLOSVORRICHTUNG

DISPOSITIF D'IDENTIFICATION DE DISPOSITIF SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.02.2021 Bulletin 2021/07**

(73) Proprietor: **Mitsubishi Electric Corporation Tokyo 100-8310 (JP)**

(72) Inventors:
• **MATSUDA, Takafumi**
**Tokyo 100-8310 (JP)**

• **AMISHIMA, Takeshi**
**Tokyo 100-8310 (JP)**
• **SUZUKI, Nobuhiro**
**Tokyo 100-8310 (JP)**

(74) Representative: **Pfenning, Meinig & Partner mbB Patent- und Rechtsanwälte Theresienhöhe 11a 80339 München (DE)**

(56) References cited:
**JP-A- 2006 211 250      JP-A- 2008 131 220
JP-A- 2008 258 737      JP-A- 2010 127 833
JP-A- 2010 127 833      US-A- 5 715 518**

**Description**

TECHNICAL FIELD

The invention relates to a radio identifying device that performs individual identification of a radio that is transmitting a radio signal.

BACKGROUND ART

A radio that transmits a radio signal is manufactured in such a manner that characteristics that satisfy predetermined specifications are obtained.

However, it is sufficient that characteristics that satisfy the specifications be obtained, and since there are characteristic tolerances, the characteristics of manufactured radios are very slightly different from the characteristics of a radio of the same type. A very slight characteristic difference is hereinafter referred to as individual difference.

Therefore, if information indicating an individual difference can be extracted from a radio signal transmitted from a radio, then it is possible to perform individual identification of the radio that is transmitting the radio signal. It is known that information indicating an individual difference often appears upon a transient response which is a rise or fall of a radio signal.

The following Patent Literature 1 discloses a radio identifying device that captures a rising waveform of a reception radio wave and compares the rising waveform of the reception radio wave with rising waveforms of known radios which are stored in advance, and thereby identifies a radio that is a transmission source of the radio wave.

JP 2010 127833 A discloses that a signal detection unit detects signal specifications of a reception signal BS from the unknown radio source. A record storage device 16 records a distribution $\sigma_n 2$ of receiver noise and a plurality of phase-toamplitude characteristics APCref associated with a name of a transmitter. An average power output unit partially extracts the reception signal BS, using a movable window, to calculate an average power PS of a partial signal. An inspection unit inspects whether the average power PS conforms to the distribution of the receiver noise, and extracts a rise start point kus and a fall end point kde of the reception signal.

US 5715518 discloses that a system and method extracts a portion of a transmitted waveform and compares the transmission characteristics of the extracted waveform to determine if they match a stored fingerprint associated with the transmitter, such as a cellular telephone. The system adaptively creates fingerprint data by storing a plurality of waveforms believed to be from a particular transmitter and calculates the variability of the individual transmissions with respect to a composite mean waveform of the transmission characteristics. The system emphasizes the variability between the individual waveforms and the composite mean waveform and determines variability values for each of the individual waveforms in the fingerprint.

CITATION LIST

PATENT LITERATURE

Patent Literature 1: JP 2002-26826 A

SUMMARY OF INVENTION

TECHNICAL PROBLEM

The radio identifying device disclosed in Patent Literature 1 can identify a radio that is a transmission source of a radio wave if a rising waveform of the reception radio wave can be captured.

However, since a transient response such as a rise does not occur so often in a radio signal transmitted from a radio, the radio identifying device disclosed in Patent Literature 1 has a problem that a situation in which a radio that is a transmission source of a radio wave cannot be identified continues for a long period of time.

The invention is made to solve a problem such as that described above, and an object of the invention is to obtain a radio identifying device that can perform individual identification of a radio from a portion of a radio signal other than a portion in which a transient response such as a rise occurs.

SOLUTION TO PROBLEM

The present invention is as defined in the appended set of claims. A radio identifying device according to the invention includes: a signal receiving unit for receiving a radio signal transmitted from a radio and demodulating the radio signal; a waveform pattern classifying unit for extracting a plurality of waveform patterns included in the radio signal demodulated by the signal receiving unit, and classifying each of the plurality of waveform patterns into one of groups of waveform patterns of same types; a feature calculating unit for calculating, for each group of waveform patterns of a same type classified by the waveform pattern classifying unit, a feature of the group of waveform patterns; and a radio identifying unit for performing individual identification of the radio on the basis of the features of the respective groups of waveform patterns calculated by the feature calculating unit.

ADVANTAGEOUS EFFECTS OF INVENTION

According to the invention, a radio identifying device is configured in such a manner that the radio identifying device includes a waveform pattern classifying unit that extracts a plurality of waveform patterns included in a radio signal demodulated by a signal receiving unit, and classifies each of the plurality of waveform patterns into one of groups of waveform patterns of the same types; and a feature calculating unit that calculates, for each group of waveform patterns of the same type classified by the waveform pattern classifying unit, a feature of the group of waveform patterns, and a radio identifying unit performs individual identification of a radio on the basis of the features of the respective groups of waveform patterns calculated by the feature calculating unit. Therefore, the radio identifying device according to the invention can perform individual identification of a radio from a portion of a radio signal other than a portion in which a transient response such as a rise occurs.

BRIEF DESCRIPTION OF DRAWINGS

FIG. 1 is a configuration diagram showing a radio identifying device according to a first embodiment.
FIG. 2 is a hardware configuration diagram showing hardware of a signal processor 4.
FIG. 3 is a hardware configuration diagram of a computer in the case where the signal processor 4 is implemented by software, firmware, or the like.
FIG. 4 is a flowchart showing a processing procedure performed when the signal processor 4 is implemented by software, firmware, or the like.
FIG. 5 is an explanatory diagram showing an example of a QPSK signal having a combination of a waveform pattern (1) and a waveform pattern (2) as specific waveform patterns.
FIG. 6 is an explanatory diagram showing symbol transition paths of waveform patterns.
FIG. 7 is an explanatory diagram showing an overview of a process of classifying waveform patterns.
FIG. 8 is an explanatory diagram showing averaging of waveform patterns of the same type by a feature calculating unit 6.
FIG. 9 is an explanatory diagram showing exemplary calculation of features by the feature calculating unit 6.
FIG. 10 is an explanatory diagram showing an overview of an individual identification process for a radio performed by an identification processing unit 9.

DESCRIPTION OF EMBODIMENTS

To describe the invention in more detail, embodiments for carrying out the invention will be described below by referring to the accompanying drawings.

First Embodiment.

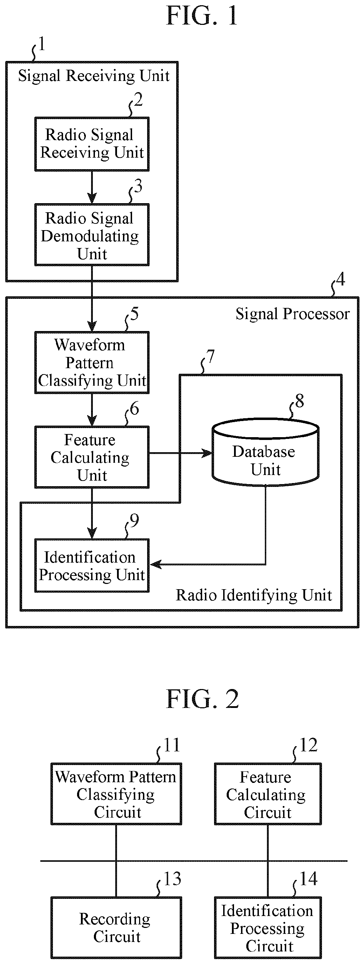

FIG. 1 is a configuration diagram showing a radio identifying device according to a first embodiment.
In FIG. 1, a signal receiving unit 1 includes a radio signal receiving unit 2 and a radio signal demodulating unit 3.
The signal receiving unit 1 receives a radio signal transmitted from a radio and demodulates the radio signal.
In the radio identifying device shown in FIG. 1, it is assumed that the radio signal transmitted from the radio is a primary modulated signal having been subjected to phase shift keying (PSK) or quadrature amplitude modulation (QAM).
The radio signal receiving unit 2 is implemented by a sensor, an antenna, or the like.
The radio signal receiving unit 2 receives a radio signal transmitted from a radio and outputs the radio signal as a reception signal to the radio signal demodulating unit 3.
The radio signal demodulating unit 3 is implemented by a demodulator, etc.
The radio signal demodulating unit 3 performs demodulation processes for the reception signal outputted from the radio signal receiving unit 2.
The radio signal demodulating unit 3 performs, as the demodulation processes for the reception signal, a process of correcting each of the initial phase and amplitude of the reception signal, etc., in addition to a process of down-converting the frequency of the reception signal.

In addition, as the demodulation processes for the reception signal, the radio signal demodulating unit 3 performs PSK demodulation on the reception signal when the radio signal is a primary PSK modulated signal, and performs QAM demodulation on the reception signal when the radio signal is a primary QAM modulated signal.

The radio signal demodulating unit 3 outputs a data sequence of a complex signal as a demodulated signal having been subjected to PSK demodulation or QAM demodulation to a waveform pattern classifying unit 5.

A signal processor 4 includes the waveform pattern classifying unit 5, a feature calculating unit 6, and a radio identifying unit 7.

FIG. 2 is a hardware configuration diagram showing hardware of the signal processor 4.

The waveform pattern classifying unit 5 is implemented by, for example, a waveform pattern classifying circuit 11 shown in FIG. 2.

The waveform pattern classifying unit 5 performs a process of extracting a plurality of waveform patterns included in the data sequence of the complex signal outputted from the radio signal demodulating unit 3, and classifying each of the plurality of waveform patterns into one of groups of wave patterns of the same types.

The feature calculating unit 6 is implemented by, for example, a feature calculating circuit 12 shown in FIG. 2.

The feature calculating unit 6 performs a process of calculating, for each group of waveform patterns of the same type classified by the waveform pattern classifying unit 5, features of the groups of waveform patterns.

The radio identifying unit 7 includes a database unit 8 and an identification processing unit 9.

The radio identifying unit 7 performs individual identification of the radio that is transmitting the radio signal, on the basis of the features of each group of waveform patterns calculated by the feature calculating unit 6.

The database unit 8 is implemented by, for example, a recording circuit 13 shown in FIG. 2.

The database unit 8 stores therein features of a plurality of waveform patterns included in radio signals that have been transmitted from known radios.

The identification processing unit 9 is implemented by, for example, an identification processing circuit 14 shown in FIG. 2.

The identification processing unit 9 compares the features of the waveform patterns stored in the database unit 8 with the features of the groups of waveform patterns calculated by the feature calculating unit 6, and performs individual identification of the radio that is transmitting the radio signal, on the basis of results of the comparison of the features.

In FIG. 1, it is assumed that each of the waveform pattern classifying unit 5, the feature calculating unit 6, the database unit 8, and the identification processing unit 9 which are components of the signal processor 4 is implemented by dedicated hardware shown in FIG. 2. Namely it is assumed that the signal processor 4 is implemented by the waveform pattern classifying circuit 11, the feature calculating circuit 12, the recording circuit 13, and the identification processing circuit 14.

Here, the recording circuit 13 corresponds, for example, to a nonvolatile or volatile semiconductor memory such as a random access memory (RAM), a read only memory (ROM), a flash memory, an erasable programmable read only memory (EPROM), or an electrically erasable programmable read only memory (EEPROM); a magnetic disk, a flexible disk, an optical disc, a compact disc, a MiniDisc, or a digital versatile disc (DVD).

In addition, the waveform pattern classifying circuit 11, the feature calculating circuit 12, and the identification processing circuit 14 correspond, for example, to a single circuit, a composite circuit, a programmed processor, a parallel programmed processor, an application specific integrated circuit (ASIC), a field-programmable gate array (FPGA), or a combination thereof.

The components of the signal processor 4 are not limited to being implemented by dedicated hardware, and the signal processor 4 may be implemented by software, firmware, or a combination of software and firmware.

The software or firmware is stored as a program in a memory of a computer. The computer indicates hardware that executes programs and corresponds, for example, to a central processing unit (CPU), a central processor, a processing unit, an arithmetic unit, a microprocessor, a microcomputer, a processor, or a digital signal processor (DSP).

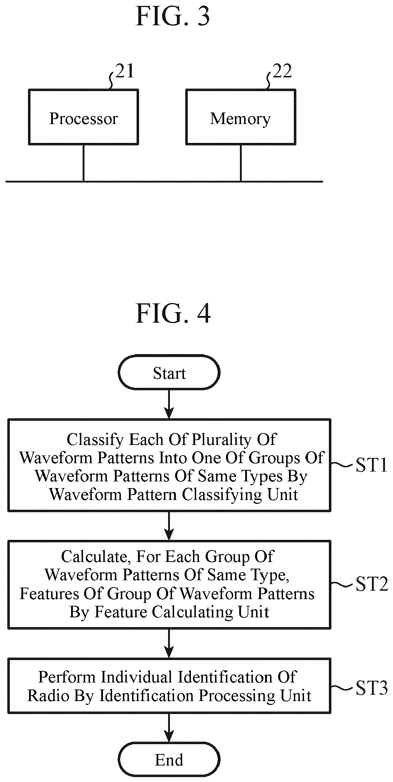

FIG. 3 is a hardware configuration diagram of a computer in the case where the signal processor 4 is implemented by software, firmware, or the like.

When the signal processor 4 is implemented by software, firmware, or the like, the database unit 8 is constructed in a memory 22 of the computer. A program for causing the computer to perform a processing procedure of the waveform pattern classifying unit 5, the feature calculating unit 6, and the identification processing unit 9 is stored in the memory 22. Then, a processor 21 of the computer executes the program stored in the memory 22.

FIG. 4 is a flowchart showing a processing procedure performed when the signal processor 4 is implemented by software, firmware, or the like.

In addition, FIG. 2 shows an example in which each component of the signal processor 4 is implemented by dedicated hardware, and FIG. 3 shows an example in which the signal processor 4 is implemented by software, firmware, or the like. However, they are merely examples, and some components of the signal processor 4 may be implemented by dedicated hardware and the other components may be implemented by software, firmware, or the like.

Next, the operation of the radio identifying device shown in FIG. 1 will be described.

The radio signal receiving unit 2 receives a radio signal transmitted from a radio and outputs the radio signal as a reception signal to the radio signal demodulating unit 3.

The radio signal transmitted from the radio is a primary PSK modulated signal or a primary QAM modulated signal.

Here, it is assumed that a quadrature phase shift keying (QPSK) signal which is a primary PSK modulated signal and is also a primary QAM modulated signal is the radio signal.

The waveform of the QPSK signal changes depending on the content of communication.

The QPSK signal whose waveform changes depending on the content of communication can be decomposed into combinations of specific waveform patterns.

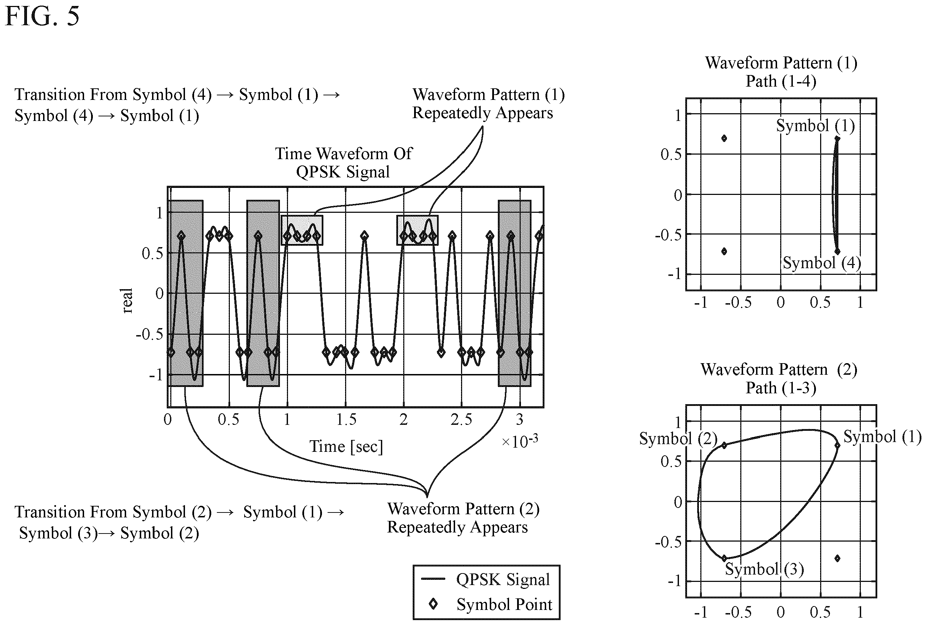

FIG. 5 is an explanatory diagram showing an example of a QPSK signal having a combination of a waveform pattern (1) and a waveform pattern (2) as specific waveform patterns.

In a waveform pattern, a presence quadrant of a symbol which is a signal point transitions with the passage of time.

The waveform pattern (1) shown in FIG. 5 is a waveform pattern in which the presence quadrant transitions from symbol (1) -> symbol (4), and a path from symbol (1) -> symbol (4) is represented by a path (1-4).

The waveform pattern (2) shown in FIG. 5 is a waveform pattern in which the presence quadrant transitions from symbol (1) -> symbol (3), and a path from symbol (1) -> symbol (3) is represented by a path (1-3).

The symbol (1) is a symbol present in a first quadrant, the symbol (3) is a symbol present in a third quadrant, and the symbol (4) is a symbol present in a fourth quadrant.

In the QPSK signal shown in FIG. 5, each of the waveform pattern (1) and the waveform pattern (2) repeatedly appears.

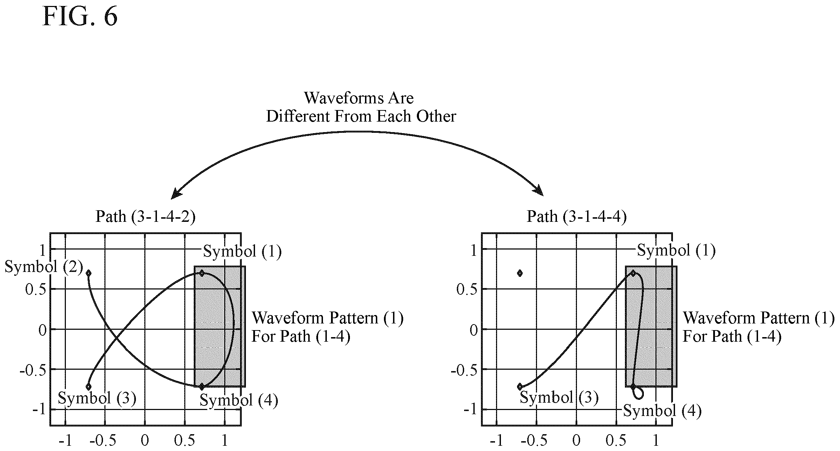

FIG. 6 is an explanatory diagram showing symbol transition paths of waveform patterns.

FIG. 6 shows a state in which the waveform pattern (1) with the path (1-4) changes depending on a symbol transition path.

The symbol transition path of the waveform pattern (1) is the path (1-4), and the path (1-4) belongs to both a path (3-1-4-2) and a path (3-1-4-4).

A waveform pattern whose symbol transition path is the path (3-1-4-2) and a waveform pattern whose symbol transition path is the path (3-1-4-4) differ in waveform from each other.

The radio signal demodulating unit 3 performs demodulation processes for the reception signal outputted from the radio signal receiving unit 2.

The radio signal demodulating unit 3 performs, as the demodulation processes for the reception signal, a process of correcting each of the initial phase and amplitude of the reception signal, etc., in addition to a process of down-converting the frequency of the reception signal. These demodulation processes are publicly known processes and thus a detailed description thereof is omitted.

In addition, the radio signal demodulating unit 3 performs QPSK demodulation on the reception signal as the demodulation processes for the reception signal, and outputs a data sequence of a complex signal as a demodulated signal to the waveform pattern classifying unit 5. The QPSK demodulation itself is a publicly known process and thus a detailed description thereof is omitted.

When the waveform pattern classifying unit 5 receives the data sequence of the complex signal from the radio signal demodulating unit 3, the waveform pattern classifying unit 5 extracts a plurality of waveform patterns included in the data sequence of the complex signal, and classifies each of the plurality of waveform patterns into one of groups of wave patterns of the same types (step ST1 of FIG. 4).

A process of classifying waveform patterns by the waveform pattern classifying unit 5 will be specifically described below.

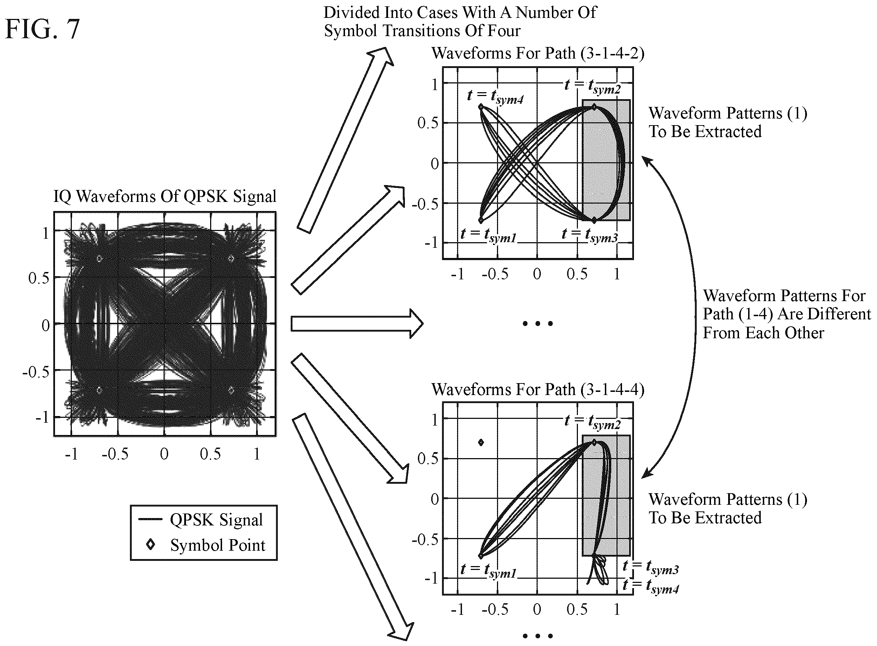

FIG. 7 is an explanatory diagram showing an overview of the process of classifying waveform patterns.

The waveform pattern classifying unit 5 performs IQ-plots on symbols at a plurality of symbol timings which are the data sequence of the complex signal.

Here, the "I" is an in-phase component of the waveform, and the "Q" is a quadrature component of the waveform.

Then, the waveform pattern classifying unit 5 determines transition paths of the symbols at the plurality of symbol timings.

The determination of a symbol transition path is determination of transitions of presence quadrants of symbols with the passage of time by identifying quadrants in which IQ-plotted symbols are present.

Namely, for example, when a symbol is present in the first quadrant at symbol timing $t = t_{sym1}$ and a symbol is present in the fourth quadrant at symbol timing $t = t_{sym2}$, the waveform pattern classifying unit 5 determines that the symbol transition path is the path (1-4).

For example, when a symbol is present in the first quadrant at symbol timing $t = t_{sym1}$ and a symbol is present in the third quadrant at symbol timing t = $t_{sym2}$, the waveform pattern classifying unit 5 determines that the symbol transition path is the path (1-3).

$t_{sym2}$ = $t_{sym1}$ + $\Delta t_{sym}$, holds true and $\Delta t_{sym}$ is the time interval between symbols (symbol rate).

Here, the waveform pattern classifying unit 5 determines symbol transition paths assuming that the symbol rate and symbol timing are known.

When the symbol rate and symbol timing are not known, the waveform pattern classifying unit 5 performs a process of estimating symbol rate and symbol timing. The process of estimating symbol rate and symbol timing is a publicly known process and thus a detailed description thereof is omitted.

Then, the waveform pattern classifying unit 5 classifies each of the plurality of waveform patterns included in the data sequence of the complex signal into one of groups of waveform patterns of the same types, on the basis of results of the determination of symbol transition paths.

Note, however, that classification of waveform patterns using only symbol transition paths of the waveform patterns which are classification targets is insufficient for enabling precise individual identification of the radio.

Hence, the waveform pattern classifying unit 5 precisely classifies waveform patterns taking into account an immediately previous path and an immediately subsequent path of a symbol transition path of a waveform pattern which is a classification target.

When a waveform pattern is classified on the basis of symbol transition paths including an immediately previous path and an immediately subsequent path, the number of symbol transitions is four, and thus, the waveform patterns included in the data sequence of the complex signal are classified into $4^4$ =256 waveform patterns.

For example, the waveform pattern (1) whose symbol transition path is the path (1-4) is classified into the following 256 waveform patterns:

- Waveform pattern whose symbol transition path is a path "1-1-4-1"
- Waveform pattern whose symbol transition path is a path "1-1-4-4"
- Waveform pattern whose symbol transition path is a path "3-1-4-2"
- Waveform pattern whose symbol transition path is a path "3-1-4-4"

When the waveform pattern classifying unit 5 classifies the waveform patterns included in the data sequence of the complex signal into $4^4$ = 256 waveform patterns, the waveform pattern classifying unit 5 determines a symbol transition path with a number of symbol transitions of four as follows:

For example, when a symbol at symbol timing t = $t_{sym1}$ is present in the third quadrant, a symbol at t = $t_{sym2}$ is present in the first quadrant, a symbol at t = $t_{sym3}$ is present in the fourth quadrant, and a symbol at t = $t_{sym4}$ is present in the second quadrant, the waveform pattern classifying unit 5 determines that the symbol transition path is a path (3-1-4-2).

For example, when a symbol at symbol timing t = $t_{sym1}$ is present in the third quadrant, a symbol at t = $t_{sym2}$ is present in the first quadrant, a symbol at t = $t_{sym3}$ is present in the fourth quadrant, and a symbol at t = $t_{sym4}$ is present in the fourth quadrant, the waveform pattern classifying unit 5 determines that the symbol transition path is a path (3-1-4-4).

the relation of $t_{sym3}$ = $t_{sym2}$ + $\Delta t_{sym}$, and the relation of $t_{sym4}$ = $t_{sym3}$ + $\Delta t_{sym}$ holds true.

Here, the waveform pattern classifying unit 5 precisely classifies waveform patterns taking into account the previous and subsequent paths of a symbol transition path of a waveform pattern which is a classification target. The waveform pattern classifying unit 5 may more precisely classify a waveform pattern, further taking into account a previous path before an immediately previous path and a subsequent path after an immediately subsequent path.

When the waveform pattern classifying unit 5 further takes into account a previous path before an immediately previous path and a subsequent path after an immediately subsequent path, the number of symbol transitions is six, and thus, the waveform patterns included in the data sequence of the complex signal is classified into $4^6$ = 4096 waveform patterns.

By increasing the number of symbol transitions, the number of waveform patterns belonging to each individual symbol transition path decreases, and thus, variation in data of waveform patterns classified on a per symbol transition path basis affects the accuracy of features for each symbol transition path. However, since a precise classification of waveform patterns is performed, more precise individual identification of the radio can be performed.

The feature calculating unit 6 calculates, for each group of waveform patterns of the same type classified by the waveform pattern classifying unit 5, features of the groups of waveform patterns (step ST2 of FIG. 4).

A process of calculating features by the feature calculating unit 6 will be specifically described below.

First, to improve signal-to-noise ratio (SNR), the feature calculating unit 6 averages waveform patterns which are classified into a group of waveform patterns of the same type by the waveform pattern classifying unit 5. The waveform pattern obtained after the averaging is hereinafter referred to as averaged waveform pattern.

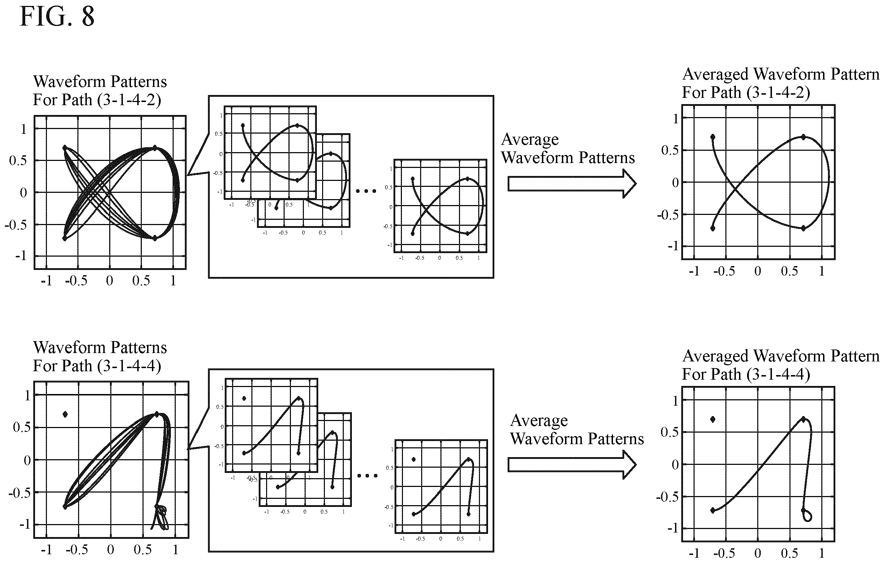

FIG. 8 is an explanatory diagram showing averaging of waveform patterns of the same type by the feature calculating unit 6.

FIG. 8 shows an example in which waveform patterns for the path (3-1-4-2) are averaged, and an example in which waveform patterns for the path (3-1-4-4) are averaged.

Then, the feature calculating unit 6 calculates, for each group of waveform patterns of the same type classified by the waveform pattern classifying unit 5 and as features of an averaged waveform pattern, the variance, skewness, and kurtosis of each of the instantaneous amplitude a(n), instantaneous phase $\phi$(n), and instantaneous frequency f(n) of the averaged waveform pattern. The "n" represents the sample number in a time direction of the averaged waveform pattern.

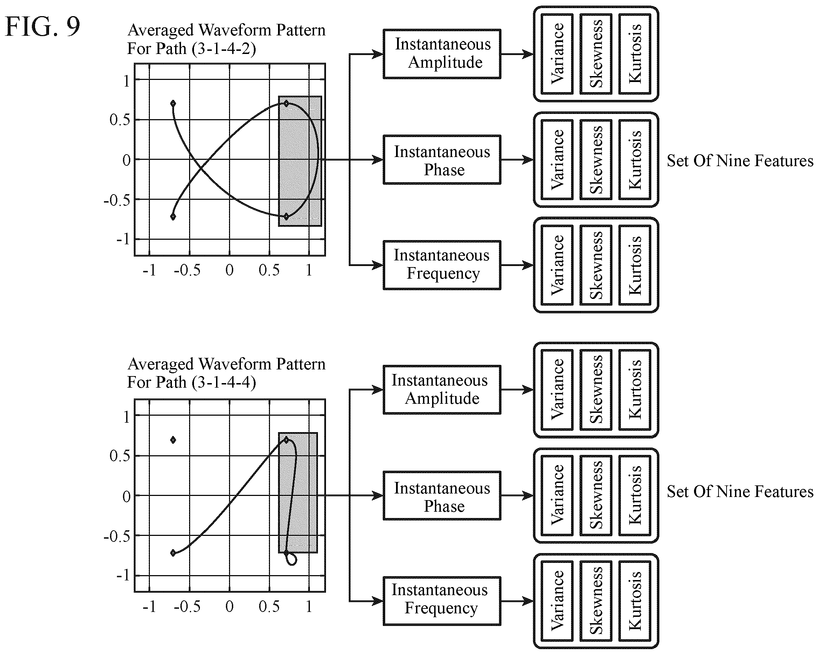

FIG. 9 is an explanatory diagram showing exemplary calculation of features by the feature calculating unit 6.

FIG. 9 shows features of an averaged waveform pattern for the path (3-1-4-2) and features of an averaged waveform pattern for the path (3-1-4-4).

As the features of the averaged waveform pattern for the path (3-1-4-2), nine features are calculated, and as the features of the averaged waveform pattern for the path (3-1-4-4), nine features are calculated.

A process of calculating variance, skewness, and kurtosis by the feature calculating unit 6 will be specifically described below.

The feature calculating unit 6 calculates an instantaneous amplitude a(n) of an averaged waveform pattern as shown in the following equation (1):

$$a(n) = \sqrt{I^2(n) + Q^2(n)} \qquad (1)$$

In equation (1), I(n) is the real part of the averaged waveform pattern, and Q(n) is the imaginary part of the averaged waveform pattern.

The feature calculating unit 6 calculates an instantaneous phase $\phi$(n) of the averaged waveform pattern as shown in the following equation (2):

$$\emptyset(n) = tan^{-1}\left[{Q(n)}\middle/{I(n)}\right] \qquad (2)$$

The feature calculating unit 6 calculates an instantaneous frequency f(n) of the averaged waveform pattern as shown in the following equation (3):

$$f(n) = \frac{1}{2\pi}\left[{\{\emptyset(n+1) - \emptyset(n)\}}\middle/{\Delta t}\right] \qquad (3)$$

In equation (3), $\Delta t$ is sampling cycle.

The feature calculating unit 6 calculates variance v of each of the instantaneous amplitude a(n), instantaneous phase $\phi$(n), and instantaneous frequency f(n) as shown in the following equation (4):

$$v = \frac{1}{N}\sum_{n=1}^{N}(x(n) - \mu)^2 \qquad (4)$$

$$\mu = \frac{1}{N}\sum_{n=1}^{N}x(n) \qquad (5)$$

In equation (4), x(n) is the instantaneous amplitude a(n), instantaneous phase $\phi$(n), or instantaneous frequency f(n).

N is the number of samples in the time direction of the averaged waveform pattern, and $\mu$ is a mean value of the instantaneous amplitude a(n), instantaneous phase $\phi$(n), or instantaneous frequency f(n).

The feature calculating unit 6 calculates skewness s of each of the instantaneous amplitude a(n), instantaneous phase φ(n), and instantaneous frequency f(n) as shown in the following equation (6):

$$s = \frac{1}{N\sigma^3} \sum_{n=1}^{N} (x(n) - \mu)^3 \qquad (6)$$

$$\sigma = \sqrt{\frac{1}{N} \sum_{n=1}^{N} (x(n) - \mu)^2} \qquad (7)$$

In equation (6), σ is a standard deviation of the instantaneous amplitude a(n), instantaneous phase φ(n), or instantaneous frequency f(n).

The feature calculating unit 6 calculates kurtosis k of each of the instantaneous amplitude a(n), instantaneous phase φ(n), and instantaneous frequency f(n) as shown in the following equation (8):

$$k = \frac{1}{N\sigma^4} \sum_{n=1}^{N} (x(n) - \mu)^4 \qquad (8)$$

When the radio signal received by the radio signal receiving unit 2 is a radio signal transmitted from a known radio, the feature calculating unit 6 saves each of the calculated features in the database unit 8 so as to be associated with a manufacturer of the known radio, a model, an individual name, and a symbol transition path.

When the radio signal received by the radio signal receiving unit 2 is a radio signal transmitted from an unknown radio, the feature calculating unit 6 outputs each of the calculated features to the identification processing unit 9.

It is assumed that information indicating whether the radio signal received by the radio signal receiving unit 2 is a radio signal transmitted from a known radio or a radio signal transmitted from an unknown radio is informed to the feature calculating unit 6 by an external source.

The identification processing unit 9 obtains the features of the averaged waveform patterns from the feature calculating unit 6.

When the waveform patterns are classified into, for example, $4^4$ = 256 waveform patterns by the waveform pattern classifying unit 5, the identification processing unit 9 obtains each of the features of the 256 averaged waveform patterns from the feature calculating unit 6.

The identification processing unit 9 compares features of averaged waveform patterns included in radio signals transmitted from a plurality of known radios which are saved in the database unit 8 with the features of the groups of waveform patterns calculated by the feature calculating unit 6.

The identification processing unit 9 performs individual identification of the radio that is transmitting the radio signal, on the basis of results of the comparison of the features (step ST3 of FIG. 4).

An individual identification process for the radio performed by the identification processing unit 9 will be specifically described below.

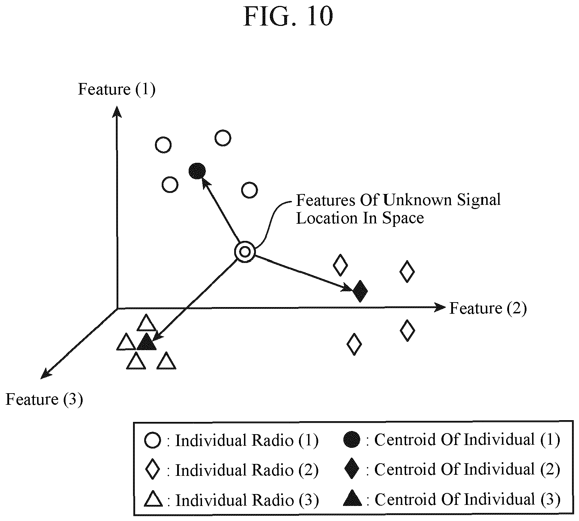

FIG. 10 is an explanatory diagram showing an overview of an individual identification process for the radio performed by the identification processing unit 9.

When the identification processing unit 9 obtains the features of the plurality of averaged waveform patterns from the feature calculating unit 6, the identification processing unit 9 creates, for each averaged waveform pattern, a feature space including a plurality of features, and calculates centroids of the feature spaces for the plurality of averaged waveform patterns.

FIG. 10 shows the centroids of feature spaces including three features (1) to (3).

When nine features (1) to (9) are calculated as the features of a single averaged waveform pattern by the feature calculating unit 6, the identification processing unit 9 creates a feature space including the nine features (1) to (9).

In addition, when a waveform pattern is classified into 256 averaged waveform patterns by the waveform pattern classifying unit 5, the identification processing unit 9 creates each of feature spaces for the 256 waveform patterns, and calculates centroids of the feature spaces for the 256 waveform patterns.

In addition, the identification processing unit 9 obtains, for each individual, features of 256 averaged waveform patterns for the individual from the database unit 8, creates each of feature spaces for the 256 waveform patterns, and calculates centroids of the feature spaces for the 256 waveform patterns.

The identification processing unit 9 calculates each of distances between the centroid of a feature space for an unknown radio and the centroids of feature spaces related to a plurality of known individuals.

When, for example, Mahalanobis distance $d_{ij}$ is calculated as the distance between two centroids, the Mahalanobis distance dij can be calculated as shown in the following equation (9):

$$d_{ij} = (c_i - c_j)^t S (c_i - c_j) \qquad\qquad (9)$$

In equation (9), $c_i$ is the centroid of a feature space for an unknown radio, and $c_j$ is the centroid of a feature space related to a known individual.

$(c_i - c_j)$ is the Euclidean distance between two points in n-dimensional space, and S is a variance-covariance matrix of a distribution in the feature space related to the known individual.

The Mahalanobis distance dij is a distance in space in which the influence of the variance of a signal distribution related to the known individual is normalized.

The identification processing unit 9 identifies the smallest distance out of the distances to the centroids of the feature spaces related to the plurality of known individuals, and identifies a known individual corresponding to the smallest distance to be the individual radio that is transmitting the radio signal.

Here, the identification processing unit 9 performs individual identification of the radio on the basis of the centroids of the feature spaces. However, the identification processing unit 9 may perform individual identification of the radio in any manner on the basis of the features of each group of waveform patterns calculated by the feature calculating unit 6. Therefore, the identification processing unit 9 may perform individual identification of the radio by a method that uses linear discrimination by the least squares method, a support vector machine (SVM), or a neural network.

In the above-described first embodiment, a radio identifying device is configured in such a manner that the radio identifying device includes the waveform pattern classifying unit 5 that extracts a plurality of waveform patterns included in a radio signal demodulated by the signal receiving unit 1, and classifies each of the plurality of waveform patterns into one of groups of waveform patterns of the same types; and the feature calculating unit 6 that calculates, for each group of waveform patterns of the same type classified by the waveform pattern classifying unit 5, features of the groups of waveform patterns, and the radio identifying unit 7 performs individual identification of a radio on the basis of the features of each group of waveform patterns calculated by the feature calculating unit 6. Therefore, the radio identifying device can perform individual identification of a radio from a portion of a radio signal other than a portion in which a transient response such as a rise occurs.

In the radio identifying device shown in FIG. 1, a radio signal transmitted from a radio is a QPSK signal.

When the radio signal transmitted from the radio is a secondary modulated signal such as orthogonal frequency division multiplexing (OFDM), the radio signal demodulating unit 3 transforms the secondary modulated signal into a primary modulated signal by an inverse process of secondary modulation and then performs demodulation processes.

In the radio identifying device shown in FIG. 1, the feature calculating unit 6 calculates, as features of an averaged waveform pattern, the variance v, skewness s, and kurtosis k of each of the instantaneous amplitude a(n), instantaneous phase $\phi$(n), and instantaneous frequency f(n) of the averaged waveform pattern.

However, this is merely an example, and the feature calculating unit 6 may calculate, as a feature of an averaged waveform pattern, a spectrum waveform obtained by performing a Fourier transform on the averaged waveform pattern. In addition, the feature calculating unit 6 may use an averaged waveform pattern itself as a feature of the averaged waveform pattern.

At this time, the identification processing unit 9 calculates cross-correlation values between a spectrum waveform for an unknown radio calculated by the feature calculating unit 6 and spectrum waveforms related to a plurality of known individuals saved in the database unit 8.

Alternatively, the identification processing unit 9 calculates cross-correlation values between an averaged waveform pattern for an unknown radio calculated by the feature calculating unit 6 and averaged waveform patterns related to a plurality of known individuals saved in the database unit 8.

Then, the identification processing unit 9 identifies a known individual with the highest cross-correlation value to be an individual radio that is transmitting a radio signal.

In the radio identifying device shown in FIG. 1, the feature calculating unit 6 calculates, as features of an averaged waveform pattern, the variance v, skewness s, and kurtosis k of each of the instantaneous amplitude a(n), instantaneous phase $\phi$(n), and instantaneous frequency f(n) of the averaged waveform pattern.

However, this is merely an example, and the feature calculating unit 6 calculates, before averaging waveform patterns of the same type, the variance, skewness, and kurtosis of each of the instantaneous amplitude a(n), instantaneous phase $\phi$(n), and instantaneous frequency f(n) of each waveform pattern.

Then, the feature calculating unit 6 may perform averaging of variances, averaging of skewnesses, and averaging of kurtosises of each of the instantaneous amplitude a(n), instantaneous phase $\phi$(n) and instantaneous frequency f(n).

A variance averaging process, a skewness averaging process, and a kurtosis averaging process each are a scalar value averaging process and thus there is an advantage that a computation load is lower than that of a process of averaging waveform patterns of the same type.

Second Embodiment.

A second embodiment describes a radio identifying device in which the feature calculating unit 6 calculates, as features of an averaged waveform pattern, the variance v, skewness s, and kurtosis k of each of an instantaneous amplitude a'(n) and an instantaneous frequency f(n) as shown below.

A configuration of the radio identifying device of the second embodiment is shown in FIG. 1 as with the radio identifying device of the first embodiment.

The feature calculating unit 6 calculates an instantaneous amplitude a(n) of an nth time sample of an averaged waveform pattern, using equation (1).

In addition, the feature calculating unit 6 calculates an instantaneous amplitude a(n+k) of an (n+k)th time sample of the averaged waveform pattern, using equation (1). The "k" takes a value from 1 to N-1.

Then, the feature calculating unit 6 calculates an instantaneous amplitude a'(n) by dividing the instantaneous amplitude a(n) by the instantaneous amplitude a(n+k) as shown in the following equation (10):

$$a'(n) = \frac{a(n)}{a(n+k)} \qquad (10)$$

The feature calculating unit 6 calculates an instantaneous frequency f(n) of the averaged waveform pattern, using equation (3).

The feature calculating unit 6 calculates, as features of the averaged waveform pattern, the variance v, skewness s, and kurtosis k of each of the instantaneous amplitude a'(n) and instantaneous frequency f(n) of the averaged waveform pattern, using equations (4) to (8).

In the radio identifying device of the second embodiment, the feature calculating unit 6 does not calculate the variance v, skewness s, and kurtosis k of an instantaneous phase $\phi(n)$. Therefore, six features are calculated per averaged waveform pattern by the feature calculating unit 6.

When the feature calculating unit 6 calculates the variance v, skewness s, and kurtosis k of each of the instantaneous amplitude a'(n) and instantaneous frequency f(n) of an averaged waveform pattern, there is an advantage that there is no influence of demodulation errors occurring in the radio signal demodulating unit 3.

The fact that there is no influence of demodulation errors occurring in the radio signal demodulating unit 3 will be described below.

First, it is assumed that an averaged waveform pattern calculated by the feature calculating unit 6 is modeled as shown in the following equation (11):

$$S(n) = A_{err} \cdot A(n) \cdot e^{j(f_{err} \cdot \Delta t \cdot n + \emptyset_{err} + \emptyset(n))} \qquad (11)$$

In equation (11), A(n) is the amplitude of the averaged waveform pattern, and $\phi(n)$ is the phase of the averaged waveform pattern.

$A_{err}$ is an amplitude error included in demodulation errors, $f_{err}$ is a frequency error included in the demodulation errors, and $\phi_{err}$ is an initial phase error included in the demodulation errors.

At this time, the instantaneous amplitude a(n) is represented by the following equation (12) and the instantaneous frequency f(n) is represented by the following equation (13):

$$a(n) = abs(S(n)) = A_{err} \cdot A(n) \qquad (12)$$

$$f(n) = \frac{1}{2\pi}\left[\frac{\{\emptyset(n+1) - \emptyset(n)\}}{\Delta t}\right] = \frac{1}{2\pi}\left\{f_{err} + \frac{\emptyset(n+1) - \emptyset(n)}{\Delta t}\right\}$$
$$\because \emptyset(n) = Angle(S(n)) = f_{err} \cdot \Delta t \cdot n + \emptyset_{err} + \emptyset(n) \qquad (13)$$

Each of the amplitude error $A_{err}$, frequency error $f_{err}$, and initial phase error $\phi_{err}$ changes every time a radio signal is received, but does not change even when the sample number n is changed. Note, however, that it is based on the premise that radio signal reception time per reception is sufficiently short and the carrier frequency or reception strength does not change during reception.

In addition, the amplitude A(n) and phase φ(n) including individual differences between radios do not change either even when the sample number n is changed.

Here, by equation (10), the following equation (14) can be derived:

$$a'(n) = \frac{a(n)}{a(n+1)} = \frac{A(n)}{A(n+1)} \qquad (14)$$

Thus, since the instantaneous amplitude a'(n) does not include the amplitude error Aerr, the frequency error ferr, and the initial phase error $\phi_{err}$, it can be said that there is no influence of demodulation errors.

In addition, for the instantaneous frequency f(n), too, by calculating variance v, skewness s, and kurtosis k, the frequency error $f_{err}$ disappears.

Variance v, skewness s, and kurtosis k are represented as f(n) - $\mu_f$ by equations (4) to (8).

$$f(n) - \mu_f = \frac{1}{2\pi \cdot \Delta t}\left[\{\emptyset(n+1) - \emptyset(n)\} - \frac{\{\emptyset(N+1) - \emptyset(1)\}}{N}\right] \qquad (15)$$

$$\mu_f = \frac{1}{N}\sum_{n=1}^{N} f(n) = \frac{1}{2\pi}\left[f_{err} + \frac{\{\emptyset(N+1) - \emptyset(1)\}}{N \cdot \Delta t}\right] \qquad (16)$$

Since the variance v, skewness s, and kurtosis k of the instantaneous frequency f(n) do not include the frequency error $f_{err}$, it can be said that there is no influence of demodulation errors.

INDUSTRIAL APPLICABILITY

The invention is suitable for a radio identifying device that performs individual identification of a radio that is transmitting a radio signal.

REFERENCE SIGNS LIST

1: signal receiving unit, 2: radio signal receiving unit, 3: radio signal demodulating unit, 4: signal processor, 5: waveform pattern classifying unit, 6: feature calculating unit, 7: radio identifying unit, 8: database unit, 9: identification processing unit, 11: waveform pattern classifying circuit, 12: feature calculating circuit, 13: recording circuit, 14: identification processing circuit, 21: processor, and 22: memory.

**Claims**

1. A radio identifying device comprising:

   a signal receiving unit (1) for receiving a radio signal transmitted from a radio and demodulating the radio signal;
   a waveform pattern classifying unit (5) for extracting a plurality of waveform patterns included in the radio signal demodulated by the signal receiving unit, and classifying each of the plurality of waveform patterns into one of groups of waveform patterns of same types;
   a feature calculating unit (6) for calculating, for each group of waveform patterns of the same types classified by the waveform pattern classifying unit, a feature of the group of waveform patterns; and
   a radio identifying unit (7) for performing individual identification of the radio on a basis of the features of the respective groups of waveform patterns calculated by the feature calculating unit;
   wherein
   the radio signal received by the signal receiving unit (1) is a phase shift keying modulated signal or a quadrature amplitude modulation modulated signal,

the signal receiving unit (1) demodulates the phase shift keying modulated signal or the quadrature amplitude modulation modulated signal and outputs, as a demodulated signal, a data sequence of a complex signal to the waveform pattern classifying unit (5), and

the waveform pattern classifying unit (5) identifies each of presence quadrants of signal points at a plurality of symbol timings included in the data sequence of the complex signal, and classifies the plurality of waveform patterns included in the radio signal into groups of waveform patterns of same types on a basis of transition paths of the presence quadrants of the signal points with passage of time;

wherein for each group of waveform patterns of the same types classified by the waveform pattern classifying unit (5), the feature calculating unit (6) calculates, as features, each of variance, skewness, and kurtosis of a value obtained by dividing an instantaneous amplitude of an nth time sample of the group of waveform patterns by an instantaneous amplitude of an (n+k)th time sample of the group of waveform patterns, and calculates, as features, each of variance, skewness, and kurtosis of an instantaneous frequency of the nth time sample of the group of waveform patterns;

wherein the radio identifying unit (7) includes:

a database unit (8) for storing features of a plurality of waveform patterns included in a radio signal transmitted from a known radio; and

an identification processing unit (9) for comparing the features of the waveform patterns stored in the database unit (8) with the features of the groups of waveform patterns calculated by the feature calculating unit (6), and performing individual identification of the radio that is transmitting the radio signal, on a basis of results of the comparison of the features;

wherein when the radio signal received by a radio signal receiving unit (2), the radio signal receiving unit (2) being included in the signal receiving unit (1), is

a radio signal transmitted from an unknown radio, the feature calculating unit (6) outputs each of the calculated features to the identification processing unit (9).

2. The radio identifying device according to claim 1, wherein the feature calculating unit (6) averages waveform patterns classified into the groups of waveform patterns of the same types by the waveform pattern classifying unit (5), and calculates a feature of the averaged waveform pattern.

**Patentansprüche**

1. Funkidentifizierungseinrichtung, umfassend:

eine Signalempfangseinheit (1) zum Empfangen eines von einem Funkgerät übertragenen Funksignals und zum Demodulieren des Funksignals;

eine Wellenformmuster-Klassifizierungseinheit (5) zum Extrahieren einer Vielzahl von Wellenformmustern, die in dem von der Signalempfangseinheit demodulierten Funksignal enthalten sind, und zum Klassifizieren jedes der Vielzahl von Wellenformmustern in eine von Gruppen von Wellenformmustern gleicher Typen;

eine Merkmalsberechnungseinheit (6) zum Berechnen eines Merkmals der Gruppe von Wellenformmustern für jede Gruppe von Wellenformmustern gleicher Typen, die von der Wellenformmuster-Klassifizierungseinheit klassifiziert werden; und

eine Funkidentifizierungseinheit (7) zum Durchführen einer individuellen Identifizierung des Funkgeräts auf Grundlage der Merkmale der jeweiligen Gruppen von Wellenformmustern, die von der Merkmalsberechnungseinheit berechnet werden;

wobei

das von der Signalempfangseinheit (1) empfangene Funksignal ein durch Phasenumtastung moduliertes Signal oder ein durch Quadraturamplitudenmodulation moduliertes Signal ist,

die Signalempfangseinheit (1) das durch Phasenumtastung modulierte Signal oder das durch Quadraturamplitudenmodulation modulierte Signal demoduliert und als demoduliertes Signal eine Datenfolge eines komplexen Signals an die Wellenformmuster-Klassifizierungseinheit (5) ausgibt, und

die Wellenformmuster-Klassifizierungseinheit (5) jeden der Präsenzquadranten von Signalpunkten bei einer Vielzahl von Symbolzeitpunkten identifiziert, die in der Datenfolge des komplexen Signals enthalten sind, und die Vielzahl von Wellenformmustern, die in dem Funksignal enthalten sind, in Gruppen von Wellenformmustern gleicher Typen auf Grundlage von Übergangswegen der Präsenzquadranten der Signalpunkte mit Ablauf der Zeit klassifiziert;

wobei für jede Gruppe von Wellenformmustern derselben Typen, die von der Wellenformmuster-Klassifizierungseinheit (5) klassifiziert werden, die Merkmalsberechnungseinheit (6) als Merkmale jedes von Varianz, Abweichung und Kurtosis eines Wertes, der durch Teilen einer momentanen Amplitude eines n-ten Zeitabtastwerts der Gruppe von Wellenformmustern durch eine momentane Amplitude eines (n+k)-ten Zeitabtastwerts der Gruppe von Wellenformmustern erhalten wird, berechnet und als Merkmale jedes von Varianz, Abweichung und Kurtosis einer momentanen Frequenz des n-ten Zeitabtastwerts der Gruppe von Wellenformmustern berechnet;

wobei die Funkidentifizierungseinheit (7) aufweist:

eine Datenbankeinheit (8) zum Speichern von Merkmalen einer Vielzahl von Wellenformmustern, die in einem von einem bekannten Funkgerät übertragenen Funksignal enthalten sind; und
eine Identifizierungsverarbeitungseinheit (9) zum Vergleichen der Merkmale der Wellenformmuster, die in der Datenbankeinheit (8) gespeichert sind, mit den Merkmalen der Gruppen von Wellenformmustern, die von der Merkmalsberechnungseinheit (6) berechnet werden, und zum Durchführen einer individuellen Identifizierung des Funkgeräts, das das Funksignal überträgt, auf Grundlage von Ergebnissen des Vergleichs der Merkmale;
wobei, wenn das von einer Funksignalempfangseinheit (2) empfangene Funksignal ein von einem unbekannten Funkgerät übertragenes Funksignal ist, wobei die Funksignalempfangseinheit (2) in der Signalempfangseinheit (1) enthalten ist, die Merkmalsberechnungseinheit (6) jedes der berechneten Merkmale an die Identifizierungsverarbeitungseinheit (9) ausgibt.

2. Funkidentifizierungseinrichtung nach Anspruch 1, wobei die Merkmalsberechnungseinheit (6) Wellenformmuster, die von der Wellenformmusterklassifizierungseinheit (5) in die Gruppen von Wellenformmustern der gleichen Typen klassifiziert werden, mittelt und ein Merkmal des gemittelten Wellenformmusters berechnet.

## Revendications

1. Dispositif d'identification radio comprenant :

une unité de réception de signaux (1) pour recevoir un signal radio émis par une radio et démoduler le signal radio ;
une unité de classification de motifs de forme d'onde (5) pour extraire une pluralité de motifs de forme d'onde inclus dans le signal radio démodulé par l'unité de réception de signal, et classer chacun de la pluralité de motifs de forme d'onde dans un des groupes de motifs de forme d'onde de mêmes types ;
une unité de calcul de caractéristiques (6) pour calculer, pour chaque groupe de modèles de formes d'onde des mêmes types classés par l'unité de classification de modèles de formes d'onde, une caractéristique du groupe de modèles de formes d'onde ; et
une unité d'identification de radio (7) pour effectuer une identification individuelle de la radio sur la base des caractéristiques des groupes respectifs de modèles de forme d'onde calculés par l'unité de calcul de caractéristiques ;
dans lequel
le signal radio reçu par l'unité de réception de signal (1) est un signal modulé par déplacement de phase ou un signal modulé par modulation d'amplitude en quadrature,
l'unité de réception de signaux (1) démodule le signal modulé par déplacement de phase ou le signal modulé par modulation d'amplitude en quadrature et émet, en tant que signal démodulé, une séquence de données d'un signal complexe vers l'unité de classification de formes d'onde (5), et
l'unité de classification de motifs de forme d'onde (5) identifie chacun des quadrants de présence des points de signal à une pluralité de synchronisations de symboles incluses dans la séquence de données du signal complexe, et classifie la pluralité de motifs de forme d'onde inclus dans le signal radio en groupes de motifs de forme d'onde de mêmes types sur la base des chemins de transition des quadrants de présence des points de signal avec le passage du temps ;
dans lequel, pour chaque groupe de modèles de formes d'onde des mêmes types classés par l'unité de classification de modèles de formes d'onde (5), l'unité de calcul de caractéristiques (6) calcule, en tant que caractéristiques, chacune des variance, asymétrie et aplatissement d'une valeur, obtenues en divisant une amplitude instantanée d'un nième échantillon de temps du groupe de motifs de forme d'onde par une amplitude instantanée d'un (n+k)ième échantillon de temps du groupe de motifs de forme d'onde, et calcule, en tant que caractéristiques, chacune de la variance, de l'asymétrie et de l'aplatissement d'une fréquence instantanée du nième échantillon de temps du groupe de motifs de forme d'onde ;

dans lequel l'unité d'identification de radio (7) inclut :

une unité de base de données (8) pour stocker les caractéristiques d'une pluralité de modèles de forme d'onde inclus dans un signal radio transmis par une radio connue ; et
une unité de traitement d'identification (9) pour comparer les caractéristiques des modèles de forme d'onde stockés dans l'unité de base de données (8) avec les caractéristiques des groupes de modèles de forme d'onde calculés par l'unité de calcul de caractéristiques (6), et effectuer une identification individuelle de la radio qui transmet le signal radio, sur la base des résultats de la comparaison des caractéristiques ;
dans lequel, lorsque le signal radio reçu par une unité de réception de signaux radio (2), l'unité de réception de signaux radio (2) étant incluse dans l'unité de réception de signaux (1), est un signal radio émis par une radio inconnue, l'unité de calcul de caractéristiques (6) envoie chacune des caractéristiques calculées à l'unité de traitement d'identification (9).

2. Dispositif d'identification radio selon la revendication 1, dans lequel l'unité de calcul de caractéristiques (6) fait la moyenne des motifs de forme d'onde classés dans les groupes de motifs de forme d'onde des mêmes types par l'unité de classification de motifs de forme d'onde (5), et calcule une caractéristique du motif de forme d'onde moyenné.

# FIG. 1

**1 Signal Receiving Unit**

**2 Radio Signal Receiving Unit**

**3 Radio Signal Demodulating Unit**

**4 Signal Processor**

**5 Waveform Pattern Classifying Unit**

**6 Feature Calculating Unit**

**7**

**8 Database Unit**

**9 Identification Processing Unit**

Radio Identifying Unit

# FIG. 2

**11 Waveform Pattern Classifying Circuit**

**12 Feature Calculating Circuit**

**13 Recording Circuit**

**14 Identification Processing Circuit**

# FIG. 3

```
        21                    22
    ┌──────────┐        ┌──────────┐
    │ Processor│        │  Memory  │
    └────┬─────┘        └────┬─────┘
         │                   │
─────────┴───────────────────┴─────────
```

# FIG. 4

```
              ┌─────────────┐
              │    Start    │
              └──────┬──────┘
                     ↓
    ┌────────────────────────────────┐
    │      Classify Each Of Plurality Of      │
    │ Waveform Patterns Into One Of Groups Of │ ~ST1
    │    Waveform Patterns Of Same Types By   │
    │    Waveform Pattern Classifying Unit    │
    └────────────────┬───────────────┘
                     ↓
    ┌────────────────────────────────┐
    │       Calculate, For Each Group Of      │
    │    Waveform Patterns Of Same Type,      │ ~ST2
    │ Features Of Group Of Waveform Patterns  │
    │       By Feature Calculating Unit       │
    └────────────────┬───────────────┘
                     ↓
    ┌────────────────────────────────┐
    │   Perform Individual Identification Of  │
    │ Radio By Identification Processing Unit │ ~ST3
    └────────────────┬───────────────┘
                     ↓
              ┌─────────────┐
              │     End     │
              └─────────────┘
```

# FIG. 5

Transition From Symbol (4) → Symbol (1) →
Symbol (4) → Symbol (1)

Waveform Pattern (1)
Repeatedly Appears

Time Waveform Of
QPSK Signal

Waveform Pattern (1)
Path (1-4)

Symbol (1)

Symbol (4)

Transition From Symbol (2) → Symbol (1) →
Symbol (3)→ Symbol (2)

Waveform Pattern (2)
Repeatedly Appears

— QPSK Signal
◊ Symbol Point

Waveform Pattern (2)
Path (1-3)

Symbol (2)          Symbol (1)

Symbol (3)

EP 3 780 423 B1

FIG. 6

FIG. 7

Divided Into Cases With A Number Of
Symbol Transitions Of Four

Waveforms For Path (3-1-4-2)

Waveform Patterns (1)
To Be Extracted

IQ Waveforms Of QPSK Signal

Waveform Patterns For
Path (1-4) Are Different
From Each Other

Waveforms For Path (3-1-4-4)

Waveform Patterns (1)
To Be Extracted

— QPSK Signal
◊ Symbol Point

FIG. 8

Waveform Patterns
For Path (3-1-4-2)

Average
Waveform Patterns

Averaged Waveform Pattern
For Path (3-1-4-2)

Waveform Patterns
For Path (3-1-4-4)

Average
Waveform Patterns

Averaged Waveform Pattern
For Path (3-1-4-4)

# FIG. 9

**Averaged Waveform Pattern For Path (3-1-4-2)**

Instantaneous Amplitude → Variance | Skewness | Kurtosis

Instantaneous Phase → Variance | Skewness | Kurtosis

Instantaneous Frequency → Variance | Skewness | Kurtosis

Set Of Nine Features

**Averaged Waveform Pattern For Path (3-1-4-4)**

Instantaneous Amplitude → Variance | Skewness | Kurtosis

Instantaneous Phase → Variance | Skewness | Kurtosis

Instantaneous Frequency → Variance | Skewness | Kurtosis

Set Of Nine Features

EP 3 780 423 B1

FIG. 10

Feature (1)

Features Of Unknown Signal
Location In Space

Feature (2)

Feature (3)

| ○ : Individual Radio (1) | ● : Centroid Of Individual (1) |
| ◇ : Individual Radio (2) | ◆ : Centroid Of Individual (2) |
| △ : Individual Radio (3) | ▲ : Centroid Of Individual (3) |

**EP 3 780 423 B1**

**REFERENCES CITED IN THE DESCRIPTION**

**Patent documents cited in the description**

- JP 2010127833 A
- US 5715518 A
- JP 2002026826 A